# EUROPEAN PATENT APPLICATION

(11) **EP 4 712 600 A1**
(43) Date of publication of application: **18.03.2026**
(21) Application number: 23936135.5
(22) Date of filing: 11.05.2023
(51) Int. Cl.: H04W 60/00

(54) **COMMUNICATION METHOD AND CORE NETWORK ELEMENT**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: RGTH
(86) International application number: PCT/CN2023/093606
(87) International publication number: WO 2024/229820

(57) **Abstract**

Provided in the present application are a communication method and a core network element. The method comprises: on the basis of at least two of a plurality of desired capabilities, a first core network element selecting one or more target core network elements from among network elements to be discovered, wherein the desired capabilities are capabilities to which a second core network element desire to subscribe, and the target core network element supports some or all of the plurality of desired capabilities. In view of the at least two desired capabilities, a first core network element may select, as a target core network element, a network element which supports the at least two desired capabilities at the same time. That is, if there is a network element to be discovered which supports the at least two desired capabilities, said network element can be selected as a core network element. Compared with the manner in which suitable network elements are selected one by one in view of a certain capability, the solution can reduce the number of selected network elements, thereby reducing the number of target core network elements which interact with a second core network element, and thus avoiding the waste of signaling and reducing the complexity.

## Description

### TECHNICAL FIELD

This application relates to the field of communications technologies, and more specifically, to a method for communication and a core network element.

### BACKGROUND

With continuous development of communications technologies, a core network element supports more and more services, that is, a core network element has more and more capabilities. In a core network element discovery process, a case that a network element supports a plurality of capabilities is not considered in a related technology, which may cause many problems.

### SUMMARY

This application provides a method for communication and a core network element. The following describes the aspects related to this application.

According to a first aspect, a method for communication is provided, where the method includes: selecting, by a first core network element, one or more target core network elements from to-be-discovered network elements based on at least two of a plurality of expected capabilities. The expected capabilities are capabilities to which a second core network element expects to subscribe, and the target core network element supports part of or all of the plurality of expected capabilities.

According to a second aspect, a method for communication is provided, where the method includes: transmitting, by a second core network element, a first request to a first core network element. The first request is used to indicate a plurality of expected capabilities and the expected capabilities are capabilities to which the second core network element expects to subscribe.

According to a third aspect, a method for communication is provided, where the method includes: determining, by a first core network element, a discovery priority of a third core network element based on first information. The first information is used to indicate a capability supported by the third core network element.

According to a fourth aspect, a core network element is provided, where the core network element is a first core network element, and the core network element includes a selection unit, configured to select one or more target core network elements from to-be-discovered network elements based on at least two of a plurality of expected capabilities. The expected capabilities are capabilities to which a second core network element expects to subscribe, and the target core network element supports part of or all of the plurality of expected capabilities.

According to a fifth aspect, a core network element is provided, where the core network element is a second core network element, and the core network element includes a second transmitting unit, configured to transmit a first request to a first core network element. The first request is used to indicate a plurality of expected capabilities and the expected capabilities are capabilities to which the second core network element expects to subscribe.

According to a sixth aspect, a core network element is provided, where the core network element is a first core network element, and the core network element includes a determining unit, configured to determine a discovery priority of a third core network element based on first information. The first information is used to indicate a capability supported by the third core network element.

According to a seventh aspect, a core network element is provided. The core network element includes a processor and a memory. The memory is configured to store one or more computer programs. The processor is configured to invoke the computer program in the memory, to cause the core network element to execute some or all of the steps of the method according to the second aspect.

According to an eighth aspect, an embodiment of this application provides a communications system, and the system includes the foregoing core network element. In another possible design, the system may further include another device that interacts with the core network element in solutions provided in embodiments of this application.

According to a ninth aspect, an embodiment of this application provides a computer-readable storage medium. The computer-readable storage medium stores a computer program. The computer program causes a core network element to execute some or all of steps in the method according to the foregoing aspects.

According to a tenth aspect, an embodiment of this application provides a computer program product. The computer program product includes a non-transitory computer-readable storage medium that stores a computer program, and the computer program is operable to cause a core network element to execute some or all of the steps in the method according to the foregoing aspects. In some implementations, the computer program product may be a software installation package.

According to an eleventh aspect, an embodiment of this application provides a chip. The chip includes a memory and a processor. The processor may invoke a computer program from the memory and run the computer program, to implement some or all of steps described in the method according to the foregoing aspects.

With reference to the at least two expected capabilities, the first core network element may select a network element that supports the at least two expected capabilities as the target core network element. In other words, if there is a to-be-discovered network element that supports the at least two expected capabilities, the to-be-discovered network element may be selected as the target core network element. Compared with a solution in which an appropriate network element is selected based on only one capability, a quantity of selected network elements can be reduced according to the solution of the present application, thereby reducing a quantity of target core network elements that interact with the second core network element, and further reducing signalling overheads and reducing complexity.

### BRIEF DESCRIPTION OF DRAWINGS

FIG. 1 is a schematic diagram of a network architecture to which embodiments of this application are applied.
FIG. 2 is an example diagram of a discovery method of a core network element.
FIG. 3 is a schematic flowchart of a method for communication according to an embodiment of this application.
FIG. 4 is a schematic flowchart of another method for communication according to an embodiment of this application.
FIG. 5 is a schematic flowchart of another method for communication according to an embodiment of this application.
FIG. 6 is a schematic flowchart of another method for communication according to an embodiment of this application.
FIG. 7 is a schematic flowchart of another method for communication according to an embodiment of this application.
FIG. 8 is a schematic structural diagram of a core network element according to an embodiment of this application.
FIG. 9 is a schematic structural diagram of another core network element according to an embodiment of this application.
FIG. 10 is a schematic structural diagram of another core network element according to an embodiment of this application.
FIG. 11 is a schematic structural diagram of an apparatus used for communication according to an embodiment of this application.

### DESCRIPTION OF EMBODIMENTS

Technical solutions in this application are described below with reference to the accompanying drawings.

### Mobile network system architecture

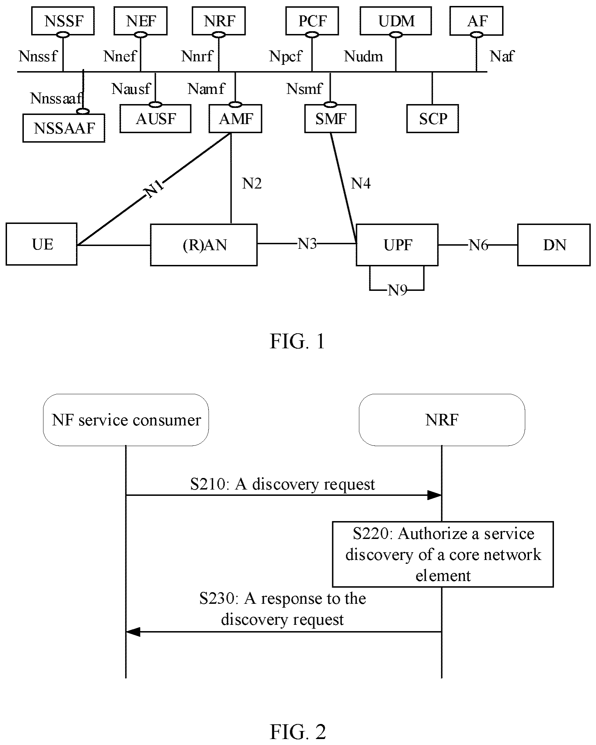

FIG. 1 is a schematic diagram of a network architecture according to an embodiment of this application. The network architecture may include a terminal device, an access network (access network, AN) network element, and a core network element.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless core network element, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in vehicle-to-everything (vehicle-to-everything, V2X), device-to-device (device to device, D2D), or the like. For example, a cellular phone and a vehicle communicate with each other through a sidelink signal. A cellular phone and a smart home device communicate with each other, without relaying a communication signal through a base station.

The access network element may be an access network device. An access network device may be an access device that is accessed by a terminal to the network architecture in a wireless manner, and is mainly responsible for radio resource management on an air interface side, quality of service (quality of service, QoS) management, data compression and encryption, and the like. The access network device may also be referred to as a radio access network (radio access network, RAN) device. For example, the access network device may be a base station. The base station may broadly cover the following various names, or may be interchanged with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard radio (multi-standard radio, MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that assumes the function of a base station in D2D, V2X, and machine-to-machine (machine-to-machine, M2M) communications, a network-side device in a 6G network, a device that assumes the function of a base station in a future communications system, or the like. The base station may support networks of a same access technology or different access technologies. A specific technology and a specific device used by the access network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the access network device in embodiments of this application may be a CU or a DU, or the access network device includes a CU and a DU. The gNB may further include an AAU.

A type (type) of a core network element may include a user plane function (user plane function, UPF) network element, an access and mobility management function (access and mobility management function, AMF) network element, a session management function (session management function, SMF) network element, a policy control function (policy control function, PCF) network element, an application function (application function, AF), a data network (data network, DN), a network slice selection function (network slice selection function, NSSF), an authentication service function (authentication server function, AUSF), a unified data management function (unified data management, UDM), a network exposure function (the network exposure function, NEF), a network repository function (network repository function, NRF), and a network slice-specific authentication and authorization function (network slice-specific authentication and authorization function, NSSAAF). The UPF network element is mainly responsible for user data transmission. Other network elements may be referred to as control plane function network elements, and are mainly responsible for certification, authentication, registration management, session management, mobility management, policy control, and the like, so as to ensure reliable and stable user data transmission.

The UPF network element may be configured to forward and receive data of the terminal. For example, the UPF network element may receive data of a service from a data network, and transmit the data to the terminal by using an access network device. The UPF network element may further receive user data from the terminal by using the access network device, and forward the user data to the data network. Transmission resources allocated and scheduled by the UPF network element to the terminal are managed and controlled by the SMF network element. Bearers between the terminal and the UPF network element may include: a user plane connection between the UPF network element and the access network device, and a channel established between the access network device and the terminal. The user plane connection is a QoS flow (flow) that may be established between the UPF network element and the access network device for data transmission.

The AMF network element may be configured to manage access of a terminal to a core network, for example, location update of the terminal, network registration, access control, mobility management of the terminal, and attachment and detachment of the terminal. In a case of providing a service for a session of the terminal, the AMF network element may further provide storage resources of a control plane for the session, so as to store a session identifier, an SMF network element identifier associated with the session identifier, and the like.

The SMF network element may be configured to: select a user plane network element for the terminal, redirect a user plane network element for the terminal, allocate an internet protocol (internet protocol, IP) address to the terminal, establish a bearer (also referred to as a session) between the terminal and the UPF network element, modify and release a session, and control QoS.

The PCF network element is configured to provide a policy for the AMF network element and the SMF network element, for example, a QoS policy or a slice selection policy.

The AF network element is configured to: interact with a 3GPP core network element to support application of a route that affects data, access a network exposure function, interact with the PCF network element for policy control, and the like.

The DN may provide a data service for a user in an IP multi-media service (IP multi-media service, IMS) network or the Internet. There may be a plurality of application servers (application server, AS) in the DN, and different application services are provided, such as an operator service, an Internet access service, or a third-party service. The AS may implement a function of the AF.

The NSSF is configured to select a network slice and supports the following functions: selecting a network slice instance set that serves a UE; determining allowed network slice selection assistance information (Network Slice Selection Assistance Information, NSSAI), and determining a mapping to subscribed single-network slice selection assistance information (Single-Network Slice Selection Assistance Information, S-NSSAI) when required; determining configured NSSAI, determining a mapping to subscribed S-NSSAI when required; and determining an AMF set that may be used to query a UE, or determining a list of candidate AMFs based on a configuration.

The AUSF is configured to: receive an identity authentication request for the terminal from the AMF, request a key from the UDM, and then forward a delivered key to the AMF for authentication processing.

The UDM includes functions such as generation and storage of user subscription data, and authentication data management, and supports interaction with an external third-party server.

The NEF is configured to implement capability exposure, that is, a capability of a network may be output to an external network based on the NEF. External untrusted applications may access internal data of a core network through the NEF, to ensure security of a network. The NEF may provide functions such as QoS capability exposure for external applications, event subscription, and AF request distribution.

The NRF is configured to perform registration, management, and status detection of a core network element, so as to implement automatic management of the core network element. When the core network element is started, it is necessary to register with the NRF to provide a service. For example, registration information may include a type, an address, a service list, and the like of the core network element.

In addition, for some networks (for example, a 5G network), a network data analytics function (network data analytics function, NWDAF) is also added to a core network. Based on the NWDAF, data may be collected from various network elements and network management systems of the core network, and big data statistics, analysis, or intelligent data analysis may be performed, to obtain network side analysis or prediction data, thereby assisting all network elements to implement more effective control on a terminal device access based on data analysis results.

In some communications systems (for example, a 5G system), a core network element may also be referred to as a network function (network function, NF).

In FIG. 1, each network element may be a network component in a hardware device, a software function running on dedicated hardware, or a virtualized function instantiated on a platform (for example, a cloud platform). It should be noted that in the network architecture shown in the foregoing figure, network elements included in the entire network architecture are merely described as examples. The network elements included in the entire network architecture are not limited in embodiments of this application.

A person skilled in the art may understand that the network architecture shown in FIG. 1 does not constitute a limitation on network architecture. In specific implementation, the network architecture may include more or fewer network elements than those shown in the figure, or combine some network elements. It should be understood that in FIG. 1, the AN or the RAN is represented in a manner of (R)AN.

### Core network element discovery

One feature of some network structures (such as a 5G network architecture) is a service-oriented architecture in which a core network element (a service provider) may provide a specific service and is invoked by another network element (a consumer) through a defined application programming interface (application programming interface, API). The core network element may perform core network element discovery (referred to as network element discovery hereinafter) as an initiator, to subscribe (subscribe) a capability supported by the service provider, and obtain a service corresponding to the capability. The initiator may also be referred to as a service consumer (service consumer) or a service subscriber.

Before a subscriber expects to discover a network element, the service provider may register information such as a capability or a service supported by the service provider, a network element type, and an address, to a first core network element. A core network element that has been successfully registered can become a to-be-discovered network element. The first core network element may control a network element discovery process. That is, if the subscriber expects to discover a network element, the subscriber is required to interact with the first core network element, and the first core network element selects a network element that meets a discovery condition. The first core network element may include an NRF. That is, a core network element discovery process may be implemented by using the NRF.

With reference to FIG. 2, the following uses a network element discovery process of a 5G system as an example for description. It should be noted that, a communications system to which the process is applied is not limited in this application, that is, the network element discovery method shown in FIG. 2 may be applied to another communications system.

The network element discovery method shown in FIG. 2 may be implemented by an NF service consumer and an NRF. The method shown in FIG. 2 may include step S210 to step S230.

Step S210: An NF service subscriber transmits a discovery request.

The discovery request may be, for example, an NF discovery request (Nnrf_NFDiscovery_Request) of the NRF.

The NF service subscriber may request to discover an NF that supports an expected capability (namely, an expected NF) by invoking the discovery request. That is, the discovery request may be used to indicate a discovery condition, and a network element that meets the discovery condition may provide a service for the subscriber. The discovery request may include one or more of the following information: an expected NF service name, an expected NF type, or the like.

Step S220: The NRF authorizes a discovery request of the NF (Authorize NF Service Discovery).

The NRF may determine, based on registration information of the NF stored on the NRF, a network element that meets a discovery request or a discovery condition.

Step S230: The NRF transmits a response to the discovery request. The response may be, for example, a response to the NF discovery request of the NRF (Nnrf_NFDiscovery_Request Response).

In response to the discovery request, the NRF may transmit address information of a network element that meets the discovery request to the NF service subscriber.

With continuous development of the network, network elements support more and more services and have more and more capabilities. The following uses an NEF as an example to describe a plurality of capabilities of the NEF. First, in an area of an artificial intelligence machine learning system (artificial intelligence machine learning system, AIMLsys), the NEF introduces a QoS monitoring capability that is based on a plurality of terminal devices. Based on this capability, the NEF may aggregate transmission bit rates of a plurality of terminal devices that perform a same task. In addition, the NEF may compare the aggregated transmission bit rate with a previously configured threshold, to determine whether a sum of transmission rates of the plurality of terminal devices exceeds a threshold. Moreover, the NEF may further notify a third party of a determining result. Second, the NEF may have a capability of assisting a third party in selecting a terminal device. Based on this capability, according to a criteria (criteria) in a request message of the third-party, the NEF may invoke a related service of another network element of a core network, to collect related information of the terminal device, further select a terminal device that meets a condition, and return the terminal device to the third party.

In a core network element discovery process, a case that a network element supports a plurality of capabilities is not considered in a related technology, which may cause many problems. For example, if a second core network element expects to subscribe to a plurality of capabilities, and a first core network element cannot discover a single network element that can support all capabilities to which the second core network element expects to subscribe, resulting in a discovery failure. To avoid the discovery failure, the second core network element has to separately perform discovery by storing the plurality of capabilities to which the second core network element expects to subscribe into a plurality of discovery messages. In this way, the discovery procedure is performed a plurality of times. Such a selection mode may result in a relatively large quantity of selected network elements, resulting in problems of signalling waste and increased complexity because the second core network element is required to interact with a relatively large quantity of network elements.

The following uses an example in which an AF expects to subscribe to the foregoing two capabilities of the NEF. The NRF may select an NEF based on two capabilities. In this case, there may be actually an NEF that supports two capabilities. However, because selections are performed separately, the NRF selects a first NEF and a second NEF each supporting two capabilities. Such a selection result may result in that the AF is required to interact with two different NEFs to invoke different capabilities. As described above, during implementation, this selection mode may result in signalling waste, and also increase complexity of an operation.

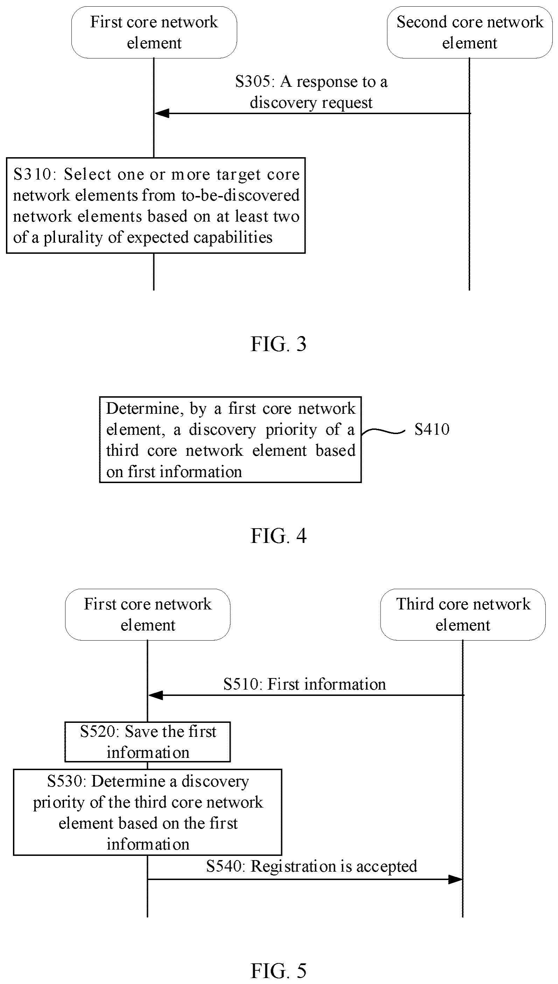

FIG. 3 is a schematic flowchart of a method for communication according to an embodiment of this application, to resolve the foregoing problem.

The method shown in FIG. 3 may be implemented by a first core network element. The first core network element may be, for example, a network element for controlling a network element discovery, that is, the first core network element may be responsible for selecting a network element. The first core network element may be, for example, an NRF. The method shown in FIG. 3 may include step S310.

Step S310: The first core network element may select one or more target core network elements from to-be-discovered network elements based on at least two of a plurality of expected capabilities.

The expected capability may be a capability (capability) or a function to which a second core network element expects to subscribe. Alternatively, the expected capability may be a capability or a function requested by the second core network element. It may be learned that the second core network element may be the subscriber, consumer, or service requester mentioned above. A type of the second core network element is not limited in this application. The second core network element may have any type described above. For example, the second core network element may be an AF, a UPF, an AMF, an SMF, a PCF, a DN, an NSSF, an AUSF, a UDM, an NEF, or the like.

There may be a plurality of expected capabilities. In other words, the second core network element may apply for subscribing to a plurality of capabilities. The plurality of expected capabilities may be all capabilities to which the second core network device expects to subscribe.

The to-be-discovered network element may be a core network element that can provide a service for the second core network element. For example, the to-be-discovered network element may be a core network element registered with the first core network element.

The to-be-discovered network element may support or have one or more capabilities. Alternatively, the to-be-discovered network element may support one or more capabilities. In an example in which the to-be-discovered network element is an NEF, capabilities supported by the to-be-discovered network element may include a QoS monitoring capability based on a plurality of terminal devices and/or a capability of assisting a third party in selecting a terminal device.

A capability supported by the to-be-discovered network element is not limited in this application. The capability supported by the to-be-discovered network element may depend on network deployment or development of the to-be-discovered network element. The to-be-discovered network element may support all capabilities capable of being supported by the network element, or support only part of capabilities capable of being supported by the network element.

The first core network element may select a target core network element. The target core network element may be a network element that supports an expected capability and that is selected by the first core network element. In other words, the target core network element may support part of or all expected capabilities. Alternatively, the target core network element is a network element that meets a discovery standard or a discovery requirement.

With reference to the at least two expected capabilities, the first core network element may select a network element that supports the at least two expected capabilities as the target core network element. In other words, if there is a to-be-discovered network element that supports the at least two expected capabilities, the to-be-discovered network element may be selected as the target core network element. Compared with a solution in which an appropriate network element is selected based on only one capability, a quantity of selected network elements can be reduced according to the solution of this application, thereby reducing a quantity of target core network elements that interact with the second core network element, and further reducing signalling overheads and reducing complexity.

For example, expected capabilities of the second core network element include a capability 1, a capability 2, and a capability 3. In some embodiments, the first core network element may select the target core network element based on the capability 1, a capability 2, and a capability 3. In some embodiments, the first core network element may select the target core network element based on any two of the capability 1, the capability 2, and the capability 3.

A quantity of expected capabilities supported by the target core network element is not limited in this application. The target core network element may be a network element that supports part of or all of the plurality of expected capabilities.

In some embodiments, the selected target core network element may support all expected capabilities. For example, the target core network element may be any network element that independently supports all expected capabilities.

For ease of understanding, the following uses an example in which a to-be-selected network element is an NEF with reference to Table 1 for description. As shown in Table 1, three types of NEFs are defined in a network. An NEF 1 has a capability 1, a capability 2, and a capability 3. An NEF 2 has the capability 2. An NEF 3 has the capability 3.

**Table 1**

| NF type (NF type) | Capability (capacity) | Address (address) |
|---|---|---|
| NEF 1 | 1, 2, and 3 | Address 1 |
| NEF 2 | 2 | Address 2 |
| NEF 3 | 3 | Address 3 |

In a case that the NEF 1, the NEF 2, and the NEF 3 all are registered with an NRF, and if the expected capabilities include the capability 1, the capability 2, and the capability 3, the target core network element may be the NEF 1 that supports all the expected capabilities.

In some embodiments, the selected target core network element may support part of expected capabilities. For example, the target core network element may support one of the plurality of expected capabilities. Based on this solution, even if no network element in the to-be-discovered network elements supports all the expected capabilities, a target core network element can be selected by the first core network element to support part of the expected capabilities of the second core network element, thereby meeting a requirement of the second core network element to some extent. Still referring to Table 1, in a case that both the NEF 2 and the NEF 3 are registered with the NRF, and if the expected capabilities include the capability 2 and the capability 3, one or more target core network elements may include at least one of the NEF 2 or the NEF 3 that supports part of the expected capabilities.

In a case that none of the to-be-discovered network elements can support the plurality of expected capabilities independently, the first core network element may select a plurality of target core network elements from the to-be-discovered network elements. The plurality of target core network elements support all the plurality of expected capabilities. In other words, when a single network element cannot support a requested capability, a plurality of target core network elements may be selected. A sum of capabilities supported by the plurality of target core network elements can support all requested capabilities. It may be understood that, in the absence of a network element that supports all the expected capabilities, a plurality of target core network elements may be selected according to this application, to meet all function requirements of the second core network element, thereby reducing a probability of a network element discovery failure.

Still referring to Table 1, in a case that both the NEF 2 and the NEF 3 are registered with the NRF, and if the expected capabilities include the capability 2 and the capability 3, it may be learned from Table 1 that none of the NEF registered with the NRF supports both the capability 2 and the capability 3, the NRF may select a plurality of target core network elements. The plurality of target core network elements may include the NEF 2 and the NEF 3. The capability 2 supported by the NEF 2 and the capability 3 supported by the NEF 3 together can support the expected capabilities of the second core network element, thereby avoiding a network element discovery failure.

In some embodiments, the target core network element may be selected in combination with a first rule. The first rule may be related to a first quantity and a discovery priority of a to-be-discovered network element, which are described below.

The first quantity may be a quantity of expected capabilities supported by a to-be-discovered network element. In an implementation, a to-be-discovered network element with a larger first quantity may be preferentially selected. For example, the to-be-discovered network elements may include a first to-be-selected network element and a second to-be-selected network element. The first rule may include that: in a case that a first quantity of the first to-be-selected network elements is greater than or equal to a first quantity of the second to-be-selected network elements, the first to-be-selected network element may be selected; or in a case that a first quantity of the second to-be-selected network elements is greater than or equal to a first quantity of the first to-be-selected network elements, the second to-be-selected network element may be selected.

Table 1 is still used as an example for description. If the expected capabilities include the capability 1 and the capability 3, a first quantity of the NEF 1 is 2, a first quantity of the NEF 2 is 0, and a first quantity of the NEF 3 is 1. In a case that the NEF 1, the NEF 2, and the NEF 3 are all registered with the NRF, the first quantity of the NEF 1 is the largest for the three NEFs, and therefore the NEF 1 may be preferentially selected as the target core network element.

The discovery priority may indicate a probability that a to-be-discovered network element is preferentially selected. A higher discovery priority indicates a higher probability that a to-be-discovered network element is selected, that is, the to-be-discovered network element is more likely to be selected.

The discovery priority may be determined by the first core network element. In an implementation, the discovery priority may be determined in a registration process. For example, the discovery priority may be determined based on first information (for example, step S410 shown in FIG. 4). The first information may be transmitted in the registration process.

In an example in which a discovery priority of a third core network element is determined, the first information may be used to indicate one or more of the following information of the third core network element: one or more supported capabilities, an address, or a type. Information about the one or more capabilities supported by the third core network element may be information about all capabilities supported by the third core network element. In other words, the first information may be used to indicate the information about all capabilities of the third core network element.

The first information may be a profile (profile). In an example in which the third core network element is an NEF, the first information may be an NEF profile (NEF profile).

In an example, the discovery priority may be related to a second quantity. The second quantity may be a quantity of capabilities supported by the to-be-discovered network elements. The second quantity may be determined based on the first information.

In an implementation, a larger second quantity may indicate a higher discovery priority. The larger second quantity indicates a more complete capability of the corresponding to-be-discovered network element. In a case that a to-be-discovered network element with a larger second quantity is currently selected, the following case may occur: if one capability or multiple capabilities to which the second core network element subsequently expects to subscribe are supported by the to-be-discovered network element, the second core network element may continue to receive a service of the network element, without initiating a network element discovery procedure again, so that communication interaction can be implemented, thereby improving system efficiency.

Table 1 is still used as an example for description. A second quantity of the NEF 1 is 3, a second quantity of the NEF 2 is 1, and a second quantity of the NEF 3 is 1. The second quantity of the NEF 1 is the largest, that is, the NEF 1 has a more complete capability. Therefore, a discovery priority of the NEF 1 may be the highest, discovery priorities of the NEF 2 and the NEF 3 may be lower than the discovery priority of the NEF 1.

After the first core network element selects one or more target core network elements, the first core network element may transmit a first indication. First indication information may be used to indicate information about the selected core network element. That is, the first indication information may be used to indicate information about the target core network element. For example, the first indication may be used to indicate one or more of the following information of one or more target core network elements: an identifier, a type, information about a supported capability, or an address.

If the first core network element fails to select a target core network element, the first indication information may not be transmitted. Alternatively, the transmitted first indication information may indicate that no target core network element is selected.

In some embodiments, the method shown in FIG. 3 may further include step S305.

Step S305: The first core network element receives a first request. Correspondingly, the second core network element transmits the first request.

The first request may be used to indicate a plurality of expected capabilities. In other words, the first request may be a request for information about a group of capabilities. The information about a group of capabilities may include information about a plurality of expected capabilities. The request for information about a group of capabilities may be carried in a message. For example, a request for a group of capabilities may be carried in a network element discovery request. The first request may be used not only to indicate a plurality of expected capabilities, but also to indicate network element types (such as an NEF) corresponding to the plurality of expected capabilities.

In some embodiments, the first request may be used to request a network element discovery. For example, the first request may be carried in a network element discovery request.

Based on the first request, the second core network element may include a plurality of expected capabilities in one piece of signalling, that is, a plurality of expected capabilities may be simultaneously requested. It may be understood that, in this way, request messages transmitted by the second core network element can be reduced, thereby reducing signalling interaction and improving communication efficiency.

As mentioned above, the first core network element may determine the discovery priority of the third core network element in the registration process. The following describes the registration process with reference to FIG. 5.

The method shown in FIG. 5 may be performed by the first core network element and the third core network element. A type of the third core network element is not limited in this application. The third core network element may be any network element that expects to be registered with the first core network element.

The method shown in FIG. 5 may include step S510 to step S540.

Step S510: The third core network element transmits first information to the first core network element.

The first information may be used to indicate information about a capability of the third core network element. For description of the first information, reference may be made to the foregoing description. Details are not described herein again. The first information may be carried in a registration request message. The registration request message may be, for example, a message Nnrf_NFManagement_NFRegister_request.

As described above, the first information may be used to indicate information about all capabilities of the third core network element. In a case that the first core network element acquires the information about all capabilities of the third core network element by using the first information, thereby ensuring that an initiator discovers an appropriate network element in a network element discovery process.

When a plurality of core network elements expect to be registered with the first core network element, the plurality of core network elements may separately transmit respective first information.

Still referring to Table 1, if all the NEF 1, the NEF 2, and the NEF 3 expect to be registered with an NRF, the NEF 1, the NEF 2, and the NEF 3 each may transmit respective first information to the NRF, to separately register respective capability information to the NRF. The first information corresponding to the NEF 1 may include one or more items of information in the row where the NEF 1 is located in Table 1. The first information corresponding to the NEF 2 may include one or more items of information in the row where the NEF 2 is located in Table 1. The first information corresponding to the NEF 3 may include one or more items of information in the row where the NEF 3 is located in Table 1.

Step S520: The first core network element saves the first information of the third core network element.

The first core network element may further mark the third core network element as an available network element or a valid network element.

Step S530: The first core network element may determine a discovery priority of the third core network element based on the first information.

Step S540: The first core network element replies to the third core network element that registration is accepted.

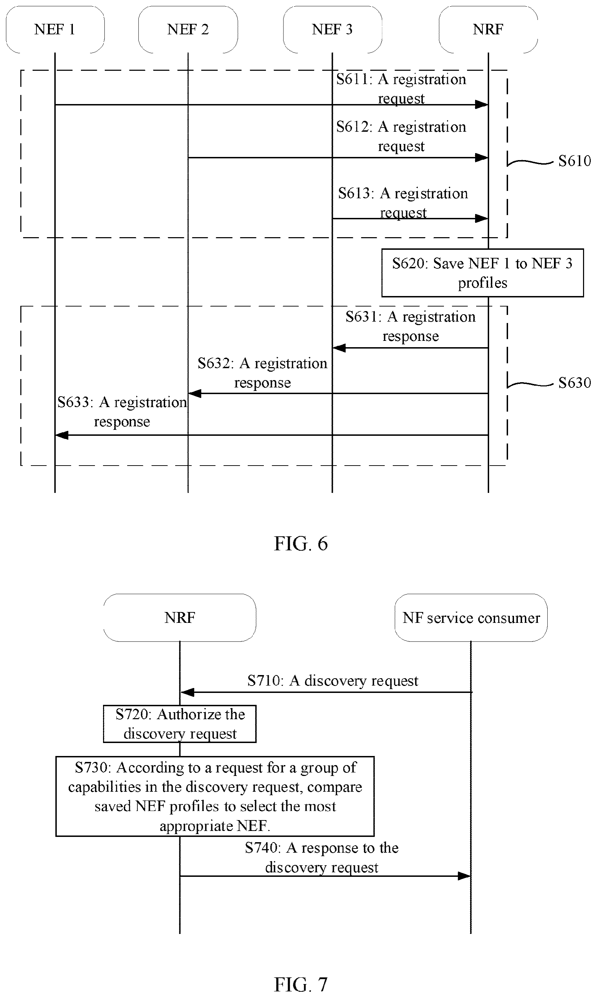

For ease of understanding, the following describes in detail a registration process of the NEF 1 to the NEF 3 with reference to Table 1 by using FIG. 6.

Step S610: The NEF 1 to the NEF 3 transmit respective registration requests to an NRF, and separately register capability information to the NRF. The registration request may include an NEF profile.

For example, step S610 may include step S611 to step S613.

Step S611: The NEF 1 transmits a registration request (Nnrf_NFManagement_NFRegister_request). The registration request includes a profile of the NEF 1.

Step S612: The NEF 2 transmits a registration request. The registration request includes a profile of the NEF 2.

Step S613: The NEF 3 transmits a registration request. The registration request includes a profile of the NEF 3.

Step S620: After receiving the registration information of each network element, the NRF saves the profile of each NEF. In addition, the NRF may further mark each network element as an available valid network element.

The NRF may further determine a discovery priority of each NEF based on the NEF profile. As shown in Table 1, because the NEF 1 has more complete capabilities, the NRF may mark the NEF 1 with a higher discovery priority, that is, discovery priorities of both the NEF 2 and the NEF 3 are lower than the discovery priority of the NEF 1.

Step S630: The NRF separately replies to the NEF 1 to the NEF 3 that the registration is accepted.

The registration being accepted may be transmitted by using a register response Nnrf_NFManagement_NFRegister_response. That is, step S630 may include step S631 to S633.

Step S631: The NRF transmits a registration response to the NEF 1 to reply that the registration is accepted.

Step S632: The NRF transmits a registration response to the NEF 2 to reply that the registration is accepted.

Step S633: The NRF transmits a registration response to the NEF 3 to reply that the registration is accepted.

After the NEF 1 to NEF 3 complete registration on the NRF, an NF service consumer may perform network element discovery. FIG. 7 is a schematic flowchart in which an NF performs a network element discovery process. The method shown in FIG. 7 may be performed by an NRF and an NEF service consumer. The method shown in FIG. 7 may include step S710 to step S740.

Step S710: An NF service consumer transmits a discovery request (Nnrf_NFDiscovery_Request) to an NRF.

The discovery request may include an NF type expected to be discovered and a request for a group of capabilities (information about a plurality of capabilities).

Step S720: The NRF authorizes the discovery request from the NF service consumer.

Step S730: According to the request for the group of capabilities, the NRF compares the NEF profiles saved in step S620 to select the most appropriate NEF.

Step S730 may include but is not limited to the following three cases.

Case 1: When the capabilities requested by the NF service consumer include a capability 1, a capability 2, and a capability 3, the NRF directly returns the NEF 1 to the NF service consumer with the highest priority.

Case 2: When the capabilities requested by the NF service consumer include the capability 2, if the NEF 1 exists, the NRF returns the NEF 1 to the NF service consumer due to the priority; if the NEF 1 does not exist, the NRF returns the NEF 2 to the NF service consumer.

Case 3: When the NF service consumer requests the capability 2 and the capability 3, and the NEF 1 does not exist, the NRF may return both the NEF 2 and the NEF 3 to a requesting party, and indicate that the NEF 2 supports the capability 2 and the NEF 3 supports the capability 3.

Step S740: The NRF transmits, to the NF service consumer, a response (Nnrf_NFDiscovery_Request Response) to a discovery request.

The response to the discovery request may include an indication of an NEF that meets a condition and information about a capability corresponding to the NEF that meets the condition.

It should be noted that, in some embodiments, the network element may also be referred to as a node.

The foregoing describes the method embodiments of this application in detail. The following describes apparatus embodiments of this application in detail. It should be understood that the description of the method embodiments corresponds to the description of the apparatus embodiments, and therefore, for a part that is not described in detail, reference may be made to the foregoing method embodiments.

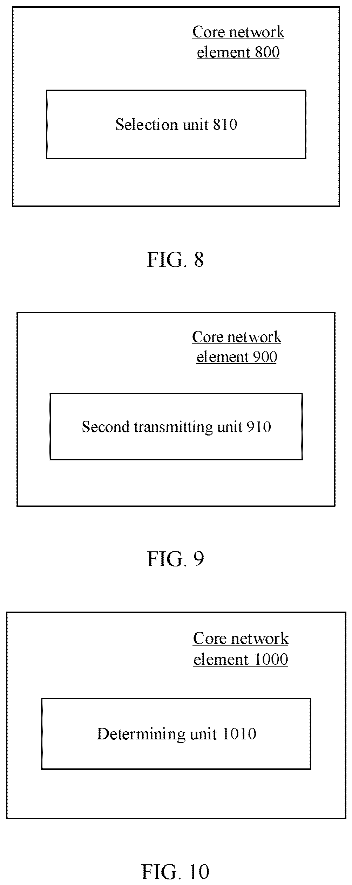

FIG. 8 is a schematic structural diagram of a core network element 800 according to an embodiment of this application. The core network element 800 may be a first core network element. The core network element 800 may include a selection unit 810.

The selection unit 810 is configured to select one or more target core network elements from to-be-discovered network elements based on at least two of a plurality of expected capabilities. The expected capabilities are capabilities to which a second core network element expects to subscribe, and the target core network element supports part of or all of the plurality of expected capabilities.

In some embodiments, the process of selecting, by the first core network element, the one or more target core network elements from the to-be-discovered network elements includes: in a case that none of the to-be-discovered network elements supports the plurality of expected capabilities independently, selecting, by the first core network element, a plurality of target core network elements from the to-be-discovered network elements, where the plurality of target core network elements support the plurality of expected capabilities.

In some embodiments, a quantity of the expected capabilities supported by the to-be-discovered network elements is a first quantity, and the process of selecting, by the first core network element, the one or more target core network elements from the to-be-discovered network elements includes: selecting, by the first core network element, the one or more target core network elements from the to-be-discovered network elements according to a first rule, where the first rule is related to one or more of the following information: the first quantity or discovery priorities of the to-be-discovered network elements.

In some embodiments, the to-be-discovered network elements include a first to-be-selected network element and a second to-be-selected network element, and the first rule includes: in a case that a first quantity of the first to-be-selected network elements is greater than or equal to a first quantity of the second to-be-selected network elements, selecting the first to-be-selected network element; or in a case that a first quantity of the second to-be-selected network elements is greater than or equal to a first quantity of the first to-be-selected network elements, selecting the second to-be-selected network element.

In some embodiments, a quantity of capabilities supported by the to-be-discovered network elements is a second quantity, and the discovery priorities are related to the second quantity.

In some embodiments, a larger second quantity indicates a higher discovery priority.

In some embodiments, the core network element 800 further includes a first receiving unit, configured to receive a first request of a second core network element. The first request is used to indicate a plurality of expected capabilities.

In some embodiments, the core network element 800 further includes a first transmitting unit, configured to transmit a first indication. The first indication is used to indicate one or more of the following information of the one or more target core network elements: an identifier or information about a supported capability.

FIG. 9 is a schematic structural diagram of another core network element 900 according to an embodiment of this application. The core network element 900 may be a second core network element. The core network element 900 may include a second transmitting unit 910.

The second transmitting unit 910 is configured to transmit a first request to a first core network element. The first request is used to indicate a plurality of expected capabilities and the expected capabilities are capabilities to which the second core network element expects to subscribe.

In some embodiments, one or more target core network elements are selected from to-be-discovered network elements based on at least two of the plurality of expected capabilities, and the target core network element supports part of or all of the plurality of expected capabilities.

In some embodiments, in a case that none of the to-be-discovered network elements supports the plurality of expected capabilities independently, there are a plurality of target core network elements, and the plurality of target core network elements support the plurality of expected capabilities.

In some embodiments, a quantity of the expected capabilities supported by the to-be-discovered network elements is a first quantity, the one or more target core network elements are selected according to a first rule, and the first rule is related to one or more of following information: the first quantity or discovery priorities of the to-be-discovered network elements.

In some embodiments, the to-be-discovered network elements include a first to-be-selected network element and a second to-be-selected network element, and the first rule includes: in a case that a first quantity of the first to-be-selected network elements is greater than or equal to a first quantity of the second to-be-selected network elements, selecting the first to-be-selected network element; or in a case that a first quantity of the second to-be-selected network elements is greater than or equal to a first quantity of the first to-be-selected network elements, selecting the second to-be-selected network element.

In some embodiments, a quantity of capabilities supported by the to-be-discovered network elements is a second quantity, and the discovery priorities are related to the second quantity.

In some embodiments, a larger second quantity indicates a higher discovery priority.

In some embodiments, the core network element 900 further includes a second receiving unit, configured to receive a first indication transmitted by the first core network element. The first indication is used to indicate one or more of the following information of the one or more target core network elements: an identifier or information about a supported capability.

FIG. 10 is a schematic structural diagram of another core network element 1000 according to an embodiment of this application. The core network element 1000 may be a first core network element. The core network element 1000 may include a determining unit 1010.

The determining unit 1010 is configured to determine a discovery priority of a third core network element based on first information. The first information is used to indicate a capability supported by the third core network element.

In some embodiments, the discovery priority is related to a quantity of capabilities supported by the third core network element.

In some embodiments, a larger quantity of capabilities supported by the third core network element indicates a higher discovery priority.

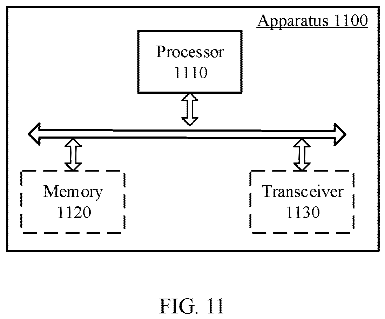

In an optional embodiment, the selection unit 810 or the determining unit 1010 may be a processor 1110. The second transmitting unit 910 may be a transceiver 1130. The core network element 800 or the core network element 1000 may further include a transceiver 1130 and a memory 1120. The core network element 900 may further include a processor 1110 and a memory 1120. Details are shown in FIG. 11.

FIG. 11 is a schematic structural diagram of an apparatus for communication according to an embodiment of this application. Dashed lines in FIG. 11 indicate that a unit or module is optional. The apparatus 1100 may be configured to implement the methods described in the foregoing method embodiments. The apparatus 1100 may be a chip, a terminal device, an access network device, or a core network device.

The apparatus 1100 may include one or more processors 1110. The processor 1110 may support the apparatus 1100 in implementing the methods described in the foregoing method embodiments. The processor 1110 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1100 may further include one or more memories 1120. The memory 1120 stores a program, and the program may be executed by the processor 1110, to cause the processor 1110 to execute the methods described in the foregoing method embodiments. The memory 1120 may be separated from or integrated into the processor 1110.

The apparatus 1100 may further include a transceiver 1130. The processor 1110 may communicate with another device or chip by using the transceiver 1130. For example, the processor 1110 may transmit data to and receive data from another device or chip by using the transceiver 1130.

An embodiment of this application further provides a computer-readable storage medium for storing a program. The computer-readable storage medium may be applied to the core network element provided in embodiments of this application, and the program causes a computer to execute the methods performed by the core network element in various embodiments of this application.

An embodiment of this application further provides a computer program product. The computer program product includes a program. The computer program product may be applied to the core network element provided in embodiments of this application, and the program causes a computer to execute the methods performed by the core network element in various embodiments of this application.

An embodiment of this application further provides a computer program. The computer program may be applied to the core network element provided in embodiments of this application, and the computer program causes a computer to execute the methods performed by the core network element in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for communication, comprising:
selecting, by a first core network element, one or more target core network elements from to-be-discovered network elements based on at least two of a plurality of expected capabilities,
wherein the expected capabilities are capabilities to which a second core network element expects to subscribe, and the target core network element supports part of or all of the plurality of expected capabilities.

2. The method according to claim 1, wherein the selecting, by the first core network element, the one or more target core network elements from the to-be-discovered network elements comprises:
in a case that none of the to-be-discovered network elements supports the plurality of expected capabilities independently, selecting, by the first core network element, a plurality of target core network elements from the to-be-discovered network elements,
wherein the plurality of target core network elements support the plurality of expected capabilities.

3. The method according to claim 1 or 2, wherein a quantity of the expected capabilities supported by the to-be-discovered network elements is a first quantity, and the selecting, by the first core network element, the one or more target core network elements from the to-be-discovered network elements comprises:
selecting, by the first core network element, the one or more target core network elements from the to-be-discovered network elements according to a first rule,
wherein the first rule is related to one or more of following information: the first quantity or discovery priorities of the to-be-discovered network elements.

4. The method according to claim 3, wherein the to-be-discovered network elements comprise a first to-be-selected network element and a second to-be-selected network element, and the first rule comprises: in a case that a first quantity of the first to-be-selected network elements is greater than or equal to a first quantity of the second to-be-selected network elements, selecting the first to-be-selected network element; or in a case that a first quantity of the second to-be-selected network elements is greater than or equal to a first quantity of the first to-be-selected network elements, selecting the second to-be-selected network element.

5. The method according to claim 3 or 4, wherein a quantity of capabilities supported by the to-be-discovered network elements is a second quantity, and the discovery priorities are related to the second quantity.

6. The method according to claim 5, wherein a larger second quantity indicates a higher discovery priority.

7. The method according to any one of claims 1 to 6, wherein the method further comprises:
receiving, by the first core network element, a first request from the second core network element,
wherein the first request is used to indicate the plurality of expected capabilities.

8. The method according to any one of claims 1 to 7, wherein the method further comprises:
transmitting, by the first core network element, a first indication,
wherein the first indication is used to indicate one or more of following information of the one or more target core network elements: an identifier or information about a supported capability.

9. A method for communication, comprising:
transmitting, by a second core network element, a first request to a first core network element,
wherein the first request is used to indicate a plurality of expected capabilities, and the expected capabilities are capabilities to which the second core network element expects to subscribe.

10. The method according to claim 9, wherein one or more target core network elements are selected from to-be-discovered network elements based on at least two of the plurality of expected capabilities, and the target core network element supports part of or all of the plurality of expected capabilities.

11. The method according to claim 10, wherein in a case that none of the to-be-discovered network elements supports the plurality of expected capabilities independently, there are a plurality of target core network elements, and the plurality of target core network elements support the plurality of expected capabilities.

12. The method according to claim 10 or 11, wherein a quantity of the expected capabilities supported by the to-be-discovered network elements is a first quantity, the one or more target core network elements are selected according to a first rule, and the first rule is related to one or more of following information: the first quantity or discovery priorities of the to-be-discovered network elements.

13. The method according to claim 12, wherein the to-be-discovered network elements comprise a first to-be-selected network element and a second to-be-selected network element, and the first rule comprises: in a case that a first quantity of the first to-be-selected network elements is greater than or equal to a first quantity of the second to-be-selected network elements, selecting the first to-be-selected network element; or in a case that a first quantity of the second to-be-selected network elements is greater than or equal to a first quantity of the first to-be-selected network elements, selecting the second to-be-selected network element.

14. The method according to claim 12 or 13, wherein a quantity of capabilities supported by the to-be-discovered network elements is a second quantity, and the discovery priorities are related to the second quantity.

15. The method according to claim 14, wherein a larger second quantity indicates a higher discovery priority.

16. The method according to any one of claims 9 to 15, wherein the method further comprises:
receiving, by the second core network element, a first indication transmitted by the first core network element,
wherein the first indication is used to indicate one or more of following information of the one or more target core network elements: an identifier or information about a supported capability.

17. A method for communication, wherein the method comprises:
determining, by a first core network element, a discovery priority of a third core network element based on first information,
wherein the first information is used to indicate a capability supported by the third core network element.

18. The method according to claim 17, the method according to claim 2, wherein the discovery priority is related to a quantity of capabilities supported by the third core network element.

19. The method according to claim 18, wherein a larger quantity of capabilities supported by the third core network element indicates a higher discovery priority.

20. A core network element, wherein the core network element is a first core network element, and the core network element comprises:
a selection unit, configured to select one or more target core network elements from to-be-discovered network elements based on at least two of a plurality of expected capabilities,
wherein the expected capabilities are capabilities to which a second core network element expects to subscribe, and the target core network element supports part of or all of the plurality of expected capabilities.

21. The core network element according to claim 20, wherein the selecting, by the first core network element, the one or more target core network elements from the to-be-discovered network elements comprises:
in a case that none of the to-be-discovered network elements supports the plurality of expected capabilities independently, selecting, by the first core network element, a plurality of target core network elements from the to-be-discovered network elements,
wherein the plurality of target core network elements support the plurality of expected capabilities.

22. The core network element according to claim 20 or 21, wherein a quantity of the expected capabilities supported by the to-be-discovered network elements is a first quantity, and the selecting, by the first core network element, the one or more target core network elements from the to-be-discovered network elements comprises:
selecting, by the first core network element, the one or more target core network elements from the to-be-discovered network elements according to a first rule,
wherein the first rule is related to one or more of following information: the first quantity or discovery priorities of the to-be-discovered network elements.

23. The core network element according to claim 22, wherein the to-be-discovered network elements comprise a first to-be-selected network element and a second to-be-selected network element, and the first rule comprises: in a case that a first quantity of the first to-be-selected network elements is greater than or equal to a first quantity of the second to-be-selected network elements, selecting the first to-be-selected network element; or in a case that a first quantity of the second to-be-selected network elements is greater than or equal to a first quantity of the first to-be-selected network elements, selecting the second to-be-selected network element.

24. The core network element according to claim 22 or 23, wherein a quantity of capabilities supported by the to-be-discovered network elements is a second quantity, and the discovery priorities are related to the second quantity.

25. The core network element according to claim 24, wherein a larger second quantity indicates a higher discovery priority.

26. The core network element according to any one of claims 20 to 25, wherein the core network element further comprises:
a first receiving unit, configured to receive a first request from the second core network element,
wherein the first request is used to indicate the plurality of expected capabilities.

27. The core network element according to any one of claims 20 to 26, wherein the core network element further comprises:
a first transmitting unit, configured to transmit a first indication,
wherein the first indication is used to indicate one or more of following information of the one or more target core network elements: an identifier or information about a supported capability.

28. A core network element, wherein the core network element is a second core network element, and the core network element comprises:
a second transmitting unit, configured to transmit a first request to a first core network element,
wherein the first request is used to indicate a plurality of expected capabilities, and the expected capabilities are capabilities to which a second core network element expects to subscribe.

29. The core network element according to claim 28, wherein one or more target core network elements are selected from to-be-discovered network elements based on at least two of the plurality of expected capabilities, and the target core network element supports part of or all of the plurality of expected capabilities.

30. The core network element according to claim 29, wherein in a case that none of the to-be-discovered network elements supports the plurality of expected capabilities independently, there are a plurality of target core network elements, and the plurality of target core network elements support the plurality of expected capabilities.

31. The core network element according to claim 29 or 30, wherein a quantity of the expected capabilities supported by the to-be-discovered network elements is a first quantity, the one or more target core network elements are selected according to a first rule, and the first rule is related to one or more of following information: the first quantity or discovery priorities of the to-be-discovered network elements.

32. The core network element according to claim 31, wherein the to-be-discovered network elements comprise a first to-be-selected network element and a second to-be-selected network element, and the first rule comprises: in a case that a first quantity of the first to-be-selected network elements is greater than or equal to a first quantity of the second to-be-selected network elements, selecting the first to-be-selected network element; or in a case that a first quantity of the second to-be-selected network elements is greater than or equal to a first quantity of the first to-be-selected network elements, selecting the second to-be-selected network element.

33. The core network element according to claim 31 or 32, wherein a quantity of capabilities supported by the to-be-discovered network elements is a second quantity, and the discovery priorities are related to the second quantity.

34. The core network element according to claim 33, wherein a larger second quantity indicates a higher discovery priority.

35. The core network element according to any one of claims 28 to 34, wherein the core network element further comprises:
a second receiving unit, configured to receive a first indication transmitted by the first core network element,
wherein the first indication is used to indicate one or more of following information of the one or more target core network elements: an identifier or information about a supported capability.

36. A core network element, wherein the core network element is a first core network element, and the core network element comprises:
a determining unit, configured to determine a discovery priority of a third core network element based on first information,
wherein the first information is used to indicate a capability supported by the third core network element.

37. The core network element according to claim 36, wherein the discovery priority is related to a quantity of capabilities supported by the third core network element.

38. The core network element according to claim 37, wherein a larger quantity of capabilities supported by the third core network element indicates a higher discovery priority.

39. A core network element, comprising a memory and a processor, wherein the memory is configured to store a program, and the processor is configured to invoke the program in the memory to cause the core network element to execute the method according to any one of claims 1 to 19.

40. An apparatus, comprising a processor configured to invoke a program from a memory, to cause the apparatus to execute the method according to any one of claims 1 to 19.

41. A chip, comprising a processor, configured to invoke a program from a memory to cause a device installed with the chip to execute the method according to any one of claims 1 to 19.

42. A computer-readable storage medium, wherein the computer-readable storage medium stores a program, and the program causes a computer to execute the method according to any one of claims 1 to 19.

43. A computer program product, comprising a program that causes a computer to execute the method according to any one of claims 1 to 19.

44. A computer program, wherein the computer program causes a computer to execute the method according to any one of claims 1 to 19.
